# EUROPEAN PATENT SPECIFICATION

(11) **EP 3 831 562 B1**
(45) Date of publication and mention of the grant of the patent: **14.06.2023**
(21) Application number: 20211344.5
(22) Date of filing: 02.12.2020
(51) Int. Cl.: B27B 5/065, B23D 47/04

(54) **FEEDING DEVICE AND MACHINE**
PLATTENZUFÜHREINRICHTUNG UND -MASCHINE
DISPOSITIF ET MACHINE D'ALIMENTATION DE PANNEAUX

(30) Priority: 04.12.2019 IT 201900022962
(43) Date of publication of application: 09.06.2021
(73) Proprietor: SCM Group S.p.A., 47921 Rimini (RN) (IT)
(72) Inventor: LATTANZI, Lorenzo, 61121 PESARO (IT)
(74) Representative: Tiburzi, Andrea

(56) References cited:
- EP-A1- 2 926 942
- EP-A1- 2 982 467
- EP-A1- 3 398 742
- EP-A2- 1 724 078
- US-A- 4 181 054
- US-A- 4 348 924

## Description

This invention relates to a feeding device for a panel saw machine according to the preamble of independent claim 1, such a feeding device being known from document DE 10 2005 020 979 A1.

In particular, the invention refers to a feeding device for a panel saw machine along a predetermined direction. More in detail, the invention refers to a feeding device for a panel saw machine along a predetermined direction wherein a plurality of gripping devices are distributed parallel to the cutting direction to ensure an optimised grip of the panels themselves during their positioning before cutting.

### BACKGROUND ART

In the panel cutting sector it is well known to use panel saw machines which share a basic structural combination wherein a frame has a support surface for the panels delimited by two shoulders, one of which has a lateral reference surface and therefore for contact with the panels to be cut. Normally, the frame carries two longitudinal beams which, in turn, support a motorised transversal beam equipped with respective gripping devices which are movable to and from a cutting station. The transversal beam is equipped with respective front grippers used to manipulate the panels on the support surface and feed them to the cutting station once they have been gripped through a respective rear edge. This structural combination can be associated with a movable feeding unit carried by one of the two longitudinal beams on the side of one of the side stop surfaces, wherein the movable unit is also equipped with respective front gripping devices, prepared and shaped to cooperate with those of the transversal beam. In the case of patent EP 2111939, the movable unit carries a pair of front gripping devices and a rear support device placed on the side of them whose function is to provide rear support during feeding when the panels of smaller width are fed to the cutting station. In this case, therefore, there is the technical problem of the lack of constraint to the rotation of the panels with a width a little greater than the distance between the contact surface on the movable unit side and the rear support unit when, in use, these panels must be moved and, in particular, moved forwards or backwards with respect to the cutting station. In fact, after making the longitudinal cuts on the panel, the operator positions the cut strips in contact on the front grippers and on the side stop surface. At this point, in order to proceed with the cutting operations, the movable unit drags the panels backwards to position them correctly in the correct cutting position with the result that the heavier panels, held only on the side, could rotate with respect to the carriage generating a squaring error condition in the cut panels.

On the other hand, it should be noted that the panels to be cut may have geometrical imperfections in the respective outer edges; in this case, it is easy to understand that if the rear support unit were to face a geometrical imperfection of the rear edge of at least one panel to be cut, the condition of contact between the respective end portion and the panel(s) to be cut may be missing and therefore, in this case, the rear support unit would be ineffective even during the pushing step, with the risk of rotation of the panel(s) to be cut being made possible during movement of the movable unit.

In consideration of the situation described above, it would be desirable to have a panel saw machine which is free from the above-mentioned drawbacks and, in particular, which is designed to carry out both forward and backward movements, where these panels are kept constantly at an unvaried distance from the same longitudinal shoulder. For this reason, in a panel saw machine where the above occurs, the panels of the type described above remain constantly parallel to the same shoulder without requiring repetition of the setting-up step during any step for processing, feeding to the cutting station and cutting and, lastly, are free from squaring errors.

### SUMMARY OF THE INVENTION

This invention relates to a feeding device according to claim 1 for a panel saw machine. In particular, the invention refers to a feeding device for a panel saw machine along a predetermined direction. More in detail, the invention refers to a feeding device for a panel saw machine along a predetermined direction wherein a plurality of gripping devices are distributed parallel to the cutting direction to ensure an optimised grip of the panels themselves during their positioning before cutting.

The above-mentioned problems are solved by the invention according to at least one of the following claims.

According to the invention, a feeding device is made for a panel saw machine for cutting flat panels, each of which has a straight side, a rear edge transversal to said side and a substantially flat upper face; said machine being provided with a frame delimited longitudinally by at least one shoulder which delimits laterally a plane of support for said panels and which extends along a predetermined direction transversally to a cutting station; said frame supporting a beam on the side of said shoulder extending parallel to said direction; the feeding device being carried by said beam in a sliding fashion to and from said cutting station and comprising a carriage equipped with at least one gripping device designed to grip at least one panel on the side of said edge; said carriage carrying a gripping unit and comprising a locking device, facing said plane to stably retain a said panel carried by said plane at the respective said face, wherein said locking device carries a suction unit in fluid-dynamic communication with a suction device through a supply conduit.

According to an embodiment of the invention, said retaining device comprises an end of stroke element associated with said locking device and designed to detect the presence of a said panel and/or determine a condition of contact between said locking device and said panel. According to an embodiment of the invention, said retaining device is carried by said carriage through the interposition of a movement device designed to move said retaining device parallel and/or transversely to said predetermined direction, parallel or transversely to said plane.

According to an embodiment of the invention, said movement device comprises at least one slide carried by said carriage, connected to said retaining device and operable through at least one linear actuator. According to an embodiment of the invention, said retaining body is L-shaped positioned alongside at least one said gripping device (60)(62).

According to an embodiment of the invention, said station defines a predetermined cutting line; each said gripping device comprising a gripper to grip at least a said panel from the side of the respective rear edge; said retaining device extending sufficiently to bring said locking device between said grippers and said cutting line when at least one of said grippers is gripping on said panel from the side of the respective rear edge. According to an embodiment of the invention, said feeding device carries said carriage between said beam and said plane or said feeding device carries said carriage laterally to said beam between said beam and said plane; the feeding device being designed to be operated autonomously. According to an embodiment of the invention, said feeding device carries said carriage in front of said beam; the feeding device being designed to be operated autonomously or by dragging.

According to some embodiments of the invention, a panel saw machine is made for cutting flat panels, each of which has a straight side, a rear edge transversal to said side and a substantially flat upper face; said machine being provided with a frame delimited longitudinally by a shoulder which delimits laterally a plane of support for said panels and which extends along a predetermined direction transversally to a cutting station for giving lateral reference to said side; said frame supporting a beam on the side of said shoulder extending parallel to said direction; a feeding device being carried by said beam in a sliding fashion to and from said cutting station and comprising a carriage equipped with at least one gripping device designed to grip at least one panel on the side of said edge transversely to the respective said face; said carriage positioned laterally or above each at least one said gripping unit and comprising a locking device, facing said plane to stably retain a said panel carried by said plane at the respective said face.

### BRIEF DESCRIPTION OF DRAWINGS

Further features and advantages of the panel saw machine according to the invention will become clearer from the following description, shown with reference to the attached figures which illustrate some non-limiting embodiments, in which identical or corresponding parts of the machine itself are identified by the same reference numbers. In particular:
- Figure 1 is a schematic perspective view of a panel saw machine according to the invention;
- Figure 2 is a front perspective view of a side portion of Figure 1 on an enlarged scale in which some parts have not been shown for clarity;
- Figure 3 is a perspective view from above of Figure 2;
- Figure 4 is a rear perspective view of Figure 1 in which some parts have not been shown for clarity;
- Figures 5a-5c are side elevation views of a portion of Figure 4 on an enlarged scale in which some parts have not been shown for clarity;
- Figure 6 is a variant of Figure 3;
- Figure 7 is a perspective view from above of Figure 6;
- Figure 8 is a front view of figure 7 on an enlarged scale; and
- Figure 9 is a front view of a variant of Figure 7 on an enlarged scale.

### DETAILED DESCRIPTION OF THE INVENTION

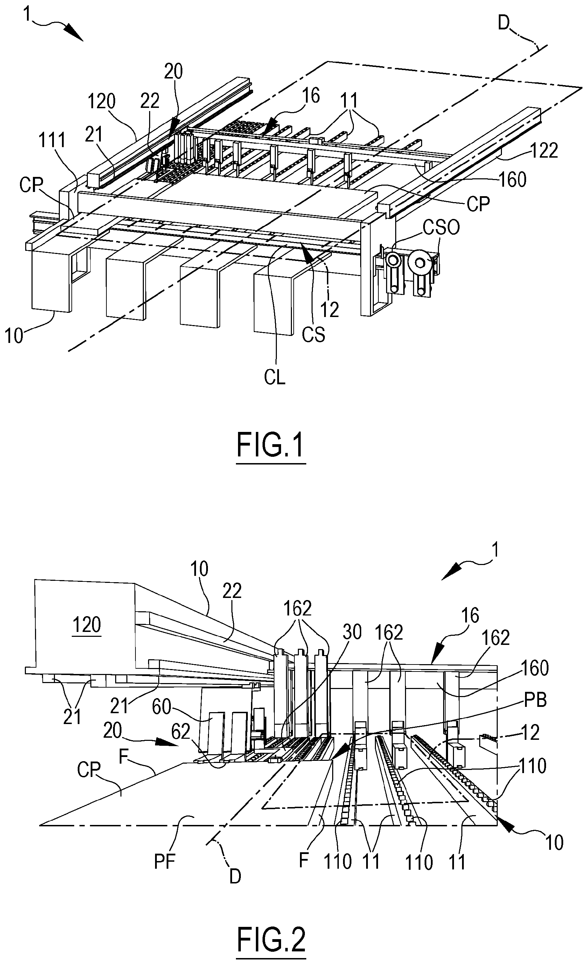

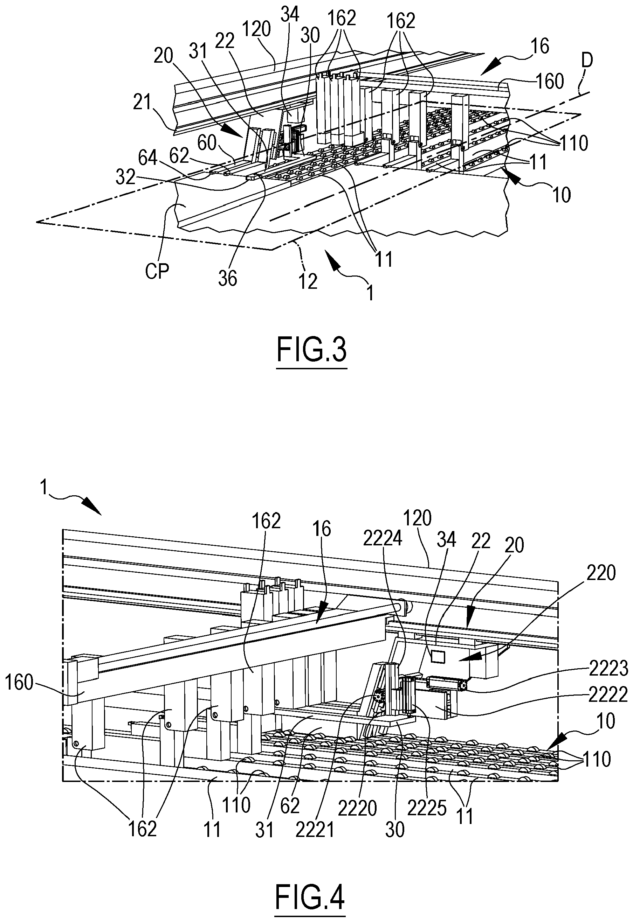

In Figure 1, the numeral 1 denotes in its entirety a panel saw machine 1 for cutting wooden panels CP with a substantially rectangular shape. Figures 1 and 3 show two of these panels CP, side by side and with different dimensions. On the other hand, the traces of the panels CP illustrated could be the traces which delimit the external dimensions of two stacks of identical panels, without thereby limiting the scope of the invention. For this reason, reference is made without distinction to a CP panel or a stack of CP panels of equal dimensions, in the sense that what applies to a panel CP also applies to a stack of panels CP of equal dimensions. It should be noted that the invention is also applicable in cases in which the panels CP are produced in a material other than wood, such as, but not limited to, plastic or similar.

Again with reference to Figure 1, the machine 1 has a frame 10 which comprises a plurality of longitudinal members 11 which extend parallel along a predetermined feeding direction D, transversally to a cutting station CS, to which is associated a cutting line CL transversal to the predetermined D direction and followed by the respective cutting components CSO, visible only in Figure 1. Each beam 11 has a plurality of roller supports 110 which geometrically define a support plane 12 for the panels CP, which is substantially horizontal in Figures 1-3. The limits of the plane 12, which is substantially rectangular, have been represented with a dotted line. The frame 10 also comprises a first beam 120 and a second beam 122, which are substantially horizontal, which delimit laterally the plane 12 and extend along the direction D.

With particular reference to Figure 2, each panel CP has a straight side F, a rear PB edge transversal to the side F and a substantially flat upper face PF. The frame 10 is delimited longitudinally by at least one shoulder 111 (visible only in Figure 1 for clarity) which extends along the predetermined direction D to give lateral reference to the side F of the panels CP placed on the supporting plane 12.

With particular reference to Figures 1-3, the machine 1 comprises a movable unit 16 for gripping and feeding comprising a beam 160 arranged between the two beams 120 and 122 and equipped with a plurality of articulated gripping units 162 equipped with gripping devices designed to grip the rear of the edge PB of the panels being processed. Moreover, the machine 1 comprises a feeding device 20 which is carried by the beam 120 in a sliding manner to and from the cutting station CS by means of guides 21 which are more clearly visible in Figure 2 between the beam 120 and the plane 12 and is motorised longitudinally in a known and not illustrated manner.

On the other hand, the feeding device 20 comprises a carriage 22 equipped with two gripping devices 60 and 62 side by side, each of which comprises a gripper 64 (Figure 3) with teeth movable transversely to the direction D and to the plane 12 in order to grip at least one panel CP by the edge PB, that is, at the rear.

With particular reference to Figure 3, the carriage 22 carries a retaining device 30 through a Cartesian movement device 220 which will be described in more detail below. The retaining device 30 is substantially L-shaped and is equipped with an elongate element 31 parallel to the direction D placed laterally to each gripping deice 60/62; the retaining device 30, and therefore also the elongate element 31, comprises an end equipped with a locking device 32 which faces the plane 12 to stably retain a panel CP carried by the plane 12 at the respective face PF.

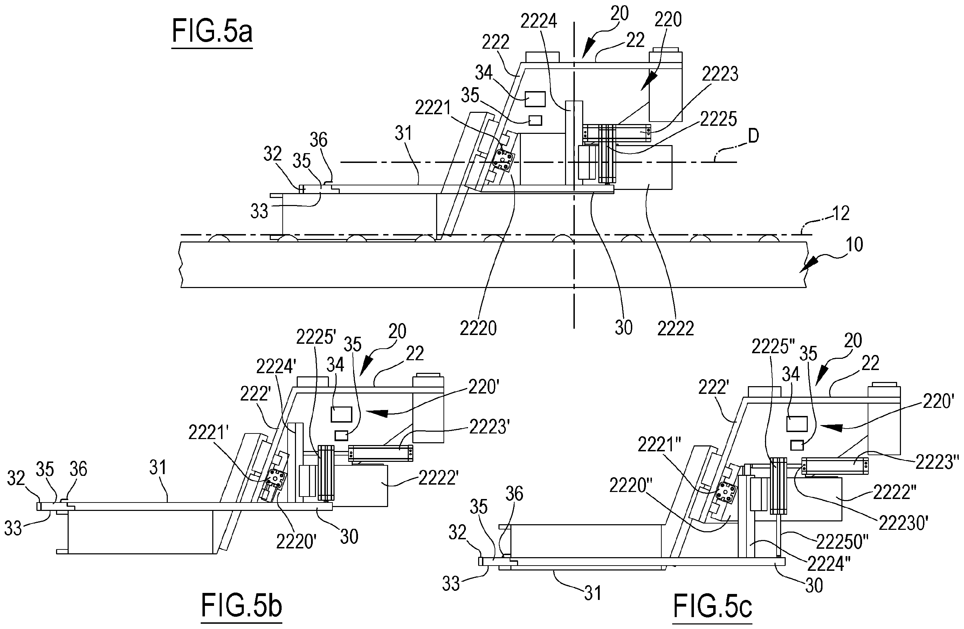

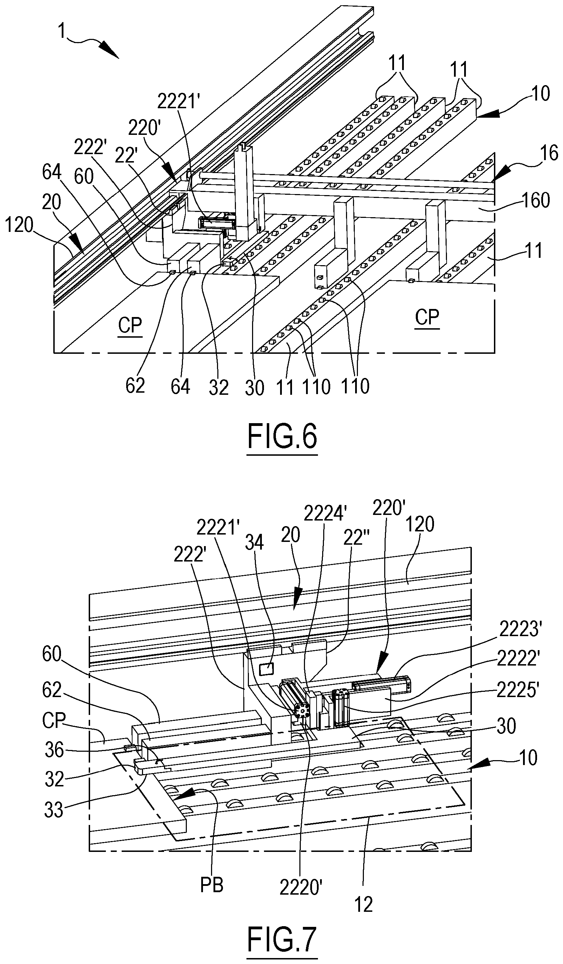

The locking device 32 comprises a suction unit 33, visible only in Figures 5a-5c and 7. This suction unit 33, which in some embodiments can be implemented through a suction cup, without limiting the scope of the invention, is in aerial connection with a suction device 34 carried by the carriage 22 through a supply conduit 36 of which only an elbow portion coupled to the suction unit 33 is visible in Figures 5a-5c and 7. For reasons of clarity, the suction device 34 has been schematically shown with a square mark visible in Figures 4, 5a-5c and 7, but it could also be carried by the frame 10 in any other position, without changing the scope of protection of invention. It is well understood that the suction device 34 must be electrically powered and controlled through an electronic control unit 37, placed for convenience alongside the device. In particular, the suction device 34 is designed to generate vacuum in the suction unit 33 when it is placed with its edge portion in contact with the upper surface of a panel CP or the first panel CP of a stack of panels CP carried on the roller supports 110 which define the plane 12. On the other hand, the elongate element 31 extends sufficiently to bring suction unit 33 between the grippers 64 of the griping devices 60 and 62 and the cutting line CL into the cutting station CS.

It should be noted that suction device 34 is designed to be activated, in use, when the peripheral flaps of the suction unit 33 are in contact with the face of the panel CP carried on the plane 12 to be cut or the panel CP placed on top of the stack of panels CP to be cut. In order to obtain this effect, a proximity sensor or an end of stroke element 35 (visible only in Figures 5a-5c) is associated with the retaining device 30, and in particular with the locking device 32, designed to detect the contact of the suction unit 33 with the same panel CP and constituted by, alternatively or in combination, a known and not illustrated optical fibre associated with the suction unit 33 in order to detect the surface of the panel CP, by a known and not illustrated encoder, or by a known and not illustrated shutter associated with the locking device 32. Naturally, any other end of stroke element 35 for detecting contact between the suction unit 33 and the upper face of a panel CP to be gripped is to be considered equivalent to the above-mentioned solutions.

It should be noted that the electronic control unit 37 is designed to receive and process signals of the presence of panels CP emitted by the optical fibres, encoder or shutter, so as to manage the operation of the suction device 34 accordingly. For this reason, whether it is an optical fibre, a shutter which detects the contact of the suction unit 33 with the panel CP, or the locking device 32 is associated with an encoder, the end of stroke element (proximity sensor) 35 associated with the retaining device 30 in fluid-dynamic communication with the suction device 34 is designed to switch the latter from a condition of inactivity to an operating condition and vice versa by means of the electronic control unit 37.

With particular reference to Figures 5a-5c the movement device 220 comprises a first portion 222 of said carriage 22, where this first portion 222 carries a first slide 2220 in a sliding manner transversely to the direction D and parallel to plane 12. The first slide 2220 carries a second slide 2222 in a sliding manner parallel to direction D and the plane 12. In turn, the second slide 2222 carries a third slide 2224 in a sliding manner transversely to the direction D and the plane 12. On the other hand, the movement device 220 comprises a first linear actuator 2221 carried by the first slide 2220 and equipped with a first rod 22210 transversal to the direction D, parallel to the plane 12 and coupled at the end to the first portion 222. The movement device 220 also comprises a second actuator 2223 carried by the second slide 2222 and equipped with a second rod 22230 parallel to the direction D and the plane 12 and coupled at the end to the first slide 2220. Finally, the movement device 220 comprise a third actuator 2225 carried by the third slide 2224 and equipped with a third rod 22250 which is oriented transversely to the direction D and the plane 12 and is coupled at the end to the second slide 2222. For this reason, the movement device 220 comprises at least one slide 2220,2222,2224 carried by the carriage 22, directly or through one of the other slides, connected to the retaining device 30 and operable through at least one linear actuator 2221,2225,2225. For this reason, the retaining device 30 is movable through the movement device 220, as well as the suction unit 33, parallel and/or transversely to the determined direction D, in parallel or transversely to said plane 12.

The use of machine 1 and the respective feeding device 20 is easily understandable from the above description and requires no further explanation. On the other hand, it should be noted that the use of the retaining device 30, and the suction unit 33 carried by the locking device 32 at the end of the elongate element 31 allows a panel CP or a stack of panels CP to be maintained locked by the gripper(s) 64 of the gripping device(s) 60 and 62 in a position parallel to the shoulder 111 during all the movements along the direction D when approaching and, above all, when moving away from the cutting station CS, avoiding the risk of rotations of the panel CP with respect to the carriage 22, that is, to the grippers 64. For this reason, the use of the suction unit 33 of the retaining device 30 also prevents the grippers 64 from leaving gripping marks on the flat opposing faces of the panel CP.

It should be noted that for the feeding of stacked panels CP, in number greater than or equal to 2, the friction between the adjoining faces of the panels is sufficient to determine the transfer of the transversal action exerted by the locking device 32 on all the stacked panels. For this reason, the use of only one locking device 32 in cooperation with the face of the upper panel CP is sufficient to achieve the aim of moving the panel(s) CP to be cut at the same time as the gripping devices 60 and 62.

Lastly, it is clear that the machine 1 described and illustrated may be modified without departing from the scope of the invention. For example, with particular reference to Figures 6-8, the feeding device 20 carries a carriage 22' modified geometrically to be placed in a position below the beam 160, particularly laterally to the beam 120 between the beam 120 and the plane 12.

With reference to these drawings, the carriage 22' also comprises in this version a Cartesian movement device 220' of the retaining device 30, so of the suction unit 33, where this movement device 220' is functionally identical to the movement device 220'. Also in this case the carriage 22' comprises a first portion 222' which carries a first slide 2220' in a sliding manner transversely to the direction D and parallel to the plane 12. The first slide 2220' carries a second slide 2222' in a sliding manner parallel to direction D and the plane 12. In turn, the second slide 2222' carries a third slide 2224' in a sliding manner transversely to the direction D and the plane 12. On the other hand, the movement device 220' comprises a first linear actuator 2221' carried by the first slide 2220' and equipped with a first rod 22210' transversal to the direction D, parallel to the plane 12 and coupled at the end to the first portion 222'. The movement device 220' also comprises a second actuator 2223' carried by the second slide 2222' and equipped with a second rod 22230' parallel to the direction D and the plane 12 and coupled at the end to the first slide 2220'. Finally, the movement device 220' comprise a third actuator 2225' carried by the third slide 2224' and equipped with a third rod 22250' which is oriented transversely to the direction D and the plane 12 and is coupled at the end to the second slide 2222'.

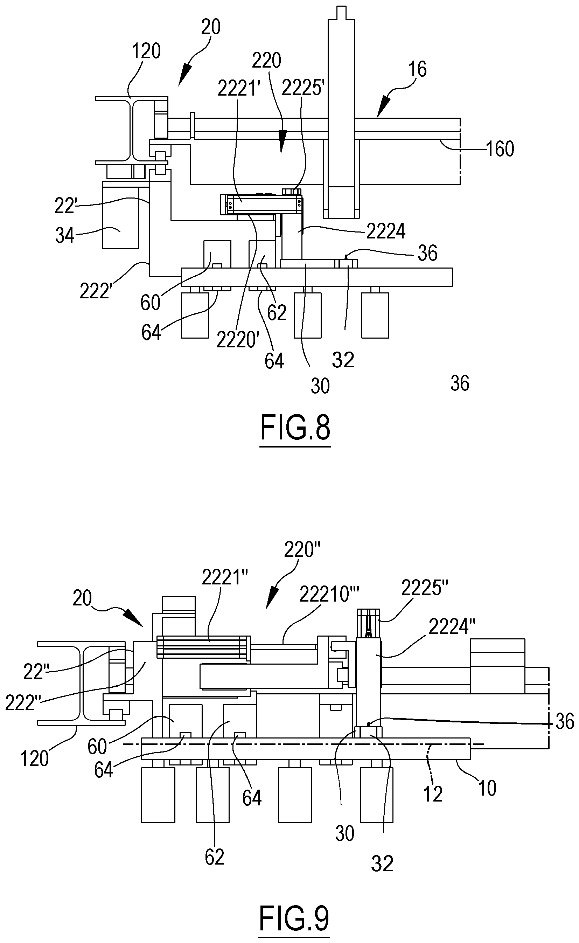

With particular reference to Figure 9, it should be noted that the invention is also applicable in the case in which the feeding device 20 carries a carriage 22" in front of the beam 120 in a position facing the beam 160. For this reason, in this version the carriage 22 can be moved either independently or by means of the beam the 160, in which case it is dragged longitudinally by this from and to the cutting line CS. For the sake of practicality, in the version of Figure 9 the structural elements in common with the two versions illustrated with reference to Figures 1-8 have been re-proposed with identical reference numbers and marked by the presence of two quotation marks "", comprising for example, but not limited to, slides, actuators, omitting their description, without detracting from the clarity of the description of the structure illustrated in the same Figure 9 and of the respective operation. On the other hand, it should be noted that in this version the carriage 22 comprises a Cartesian movement device 220" of the retaining device 30, so of the suction unit 33, where the movement device 220" is functionally identical to the movement device 220' and to the movement device 220". It should be noted that also in this case the carriage 22 carries a Cartesian type movement device 220". The only difference of this version compared to the two previous versions is that the respective first linear actuator 2221" is carried by the first portion 222" and has a first rod 22210" transversal to the direction D, parallel to the plane 12 and coupled at the end to the first slide 2220".

It should be noted that the above-mentioned linear actuators 2221, 2221', 2221", 2223, 2223', 2223", 2225, 2225', 2225" may be of the fluid-dynamic or electrically operated type or can be operated in any other way, without affecting the scope of the invention. Moreover, it should be noted that, acting on the linear actuators, the locking device 32 is movable to and from a position which, measured with respect to plane 12, is just greater than the maximum thickness allowed for the panel CP or stacks of panels CP to be cut.

On the other hand, the locking device 32 may be without the suction unit 33, but couple in a stable manner with the panel CP to be cut (or with the panel (CP) which delimits at the top a stack of panels (CP) to be cut) for example, but not necessarily, by pressure, resulting in a condition of adhesion with the stack of panels CP.

Moreover, the retaining device 30 can be substantially straight in order to position the respective locking device 32 between the gripping devices 60/62 in an advanced position close to the cutting line CL.

The panel sawing machine 1 and the respective feeding device 20 completely solve the technical problem described above of avoiding the rotation of the panels to be cut as a result of longitudinal movement (feeding or retraction) of the panels with respect to the cutting station CS in a simple and economical manner, so that the panel sawing machine 1 and the respective feeding device 20 represent a step forward in the development of the sector of cutting flat panels, made of wood or any other material.

## Claims

1. A feeding device (20) for a panel saw machine (1) for cutting flat panels (CP), each of which has a straight side (F), a rear edge (PB) transversal to said side (F) and a substantially flat upper face (PF); said machine being provided with a frame (10) delimited longitudinally by at least one shoulder (111) which delimits laterally a plane (12) of support for said panels (CP) and which extends along a predetermined direction (D) transversally to a cutting station (CS); said frame (10) supporting at least one beam (120) on the side of said shoulder (111) extending parallel to said direction (D); said feeding device (20) being carried by said beam (120) in a sliding fashion to and from said cutting station (CS) and comprising a carriage (22)(22')(22") equipped with at least one gripping device (60) (62) designed to grip at least one panel (CP) on the side of said edge (PB); wherein said carriage (22)(22')(22") carries a retaining device (30) comprising a locking device (32), facing said plane (12) to stably retain a said panel (CP) carried by said plane (12) at the respective said face (PF), said feeding device (20) being **characterised in that** said locking device (32) comprises a suction unit (33) in fluid-dynamic communication with a suction device (34) through a supply conduit (36).

2. The device according to claim 1, **characterised in that** said locking device (32) is movable transversely to said plane (12).

3. The device according to claim 1 or 2, **characterised in that** said retaining device (30) comprises an end of stroke element (35) associated with said locking device (32) to detect the presence of said panel (CP) and/or determine a condition of contact between said locking device (32) and said panel (CP).

4. The device according to any one of the preceding claims, **characterised in that** said retaining device (30) is carried by said carriage (22)(22')(22") through the interposition of a movement device (220) designed to move said retaining device (30) parallel and/or transversely to said predetermined direction (D), parallel or transversely to said plane (12).

5. The device according to claim 4, **characterised in that** said movement device (220) comprises at least one slide (2220)(2222)(2224)(2220')(2222')(2224')(2220")(2222")(2224") carried by said carriage (22)(22')(22"), connected to said retaining device (30) and operable through at least one linear actuator (2221)(2225)(2225)(2221')(2225')(2225')(2221")(2225")(2225").

6. The device according to any one of the preceding claims, **characterised in that** said retaining device (30) is L-shaped and positioned alongside at least a said gripping device (60)(62).

7. The device according to any one of the preceding claims, **characterised in that** said station (CS) defines a predetermined cutting line (CL); each said gripping device (60)(62) comprising a gripper (64) to grip at least a said panel (CP) from the side of the respective rear edge (PB); said retaining device (30) extending sufficiently to bring said locking device (32) between said grippers (64) and said cutting line (CL) when at least one of said grippers (64) is gripping on said panel (CP) from the side of the respective rear edge (PB).

8. The device according to any one of the preceding claims, in that said feeding device (20) carries said carriage (22) between said beam (120) and said plane (12) or said feeding device (20) carries said carriage (22') laterally to said beam (120) between said beam (120) and said plane (12); the feeding device (20) being designed to be operated autonomously.

9. The device according to any one of the preceding claims, **characterised in that** said feeding device (20) carries said carriage (22) in front of said beam (120); said feeding device (20) being designed to be operated autonomously or by dragging.

10. A panel saw machine (1) for cutting flat panels (CP), each of which has a straight side (F), a rear edge (PB) transversal to said side (F) and a substantially flat upper face (PF); said machine being provided with a frame (10) delimited longitudinally by one shoulder (111) which delimits laterally a plane (12) of support for said panels (CP) and which extends along a predetermined direction (D) transversally to a cutting station (CS); said frame (10) supporting a beam (120) on the side of said shoulder (111) extending parallel to said direction (D); **characterised in that** it comprises a feeding device (20) according to any one of claims 1 to 8.

## Patentansprüche

1. Zuführvorrichtung (20) für eine Plattensägemaschine (1) zum Schneiden von flachen Platten (CP), wovon jede eine gerade Seite (F), eine hintere Kante (PB) quer zu der Seite (F) und eine im Wesentlichen flache obere Fläche (PF) aufweist; wobei die Maschine mit einem Rahmen (10) versehen ist, der in Längsrichtung durch mindestens eine Schulter (111) begrenzt ist, die seitlich eine Ebene (12) zum Tragen der Platten (CP) begrenzt und die sich entlang einer vorbestimmten Richtung (D) quer zu einer Schneidestation (CS) erstreckt; wobei der Rahmen (10) mindestens einen Träger (120) auf der Seite der Schulter (111) trägt, die sich parallel zu der Richtung (D) erstreckt; wobei die Zufuhrvorrichtung (20) von dem Träger (120) gleitend zu und von der Schneidestation (CS) getragen wird und umfassend einen Schlitten (22) (22') (22"), der mit mindestens einer Greifvorrichtung (60) (62) ausgestattet ist, die konstruiert ist, um mindestens eine Platte (CP) auf der Seite der Kante (PB) zu greifen; wobei der Wagen (22) (22') (22") eine Haltevorrichtung (30) trägt, die eine Verriegelungsvorrichtung (32) umfasst, die der Ebene (12) zugewandt ist, um eine von der Ebene (12) getragene Platte (CP) an der jeweiligen Fläche (PF) stabil zu halten, wobei die Zuführvorrichtung (20) **dadurch gekennzeichnet ist, dass** die Verriegelungsvorrichtung (32) eine Saugeinheit (33) umfasst, die über eine Versorgungsleitung (36) in fluiddynamischer Verbindung mit einer Saugeinrichtung (34) ist.

2. Vorrichtung nach Anspruch 1, **dadurch gekennzeichnet, dass** die Verriegelungsvorrichtung (32) quer zu der Ebene (12) bewegbar ist.

3. Vorrichtung nach Anspruch 1 oder 2, **dadurch gekennzeichnet, dass** die Haltevorrichtung (30) ein mit der Verriegelungsvorrichtung (32) assoziiertes Endlagenelement (35) umfasst, um das Vorhandensein der Platte (CP) zu erfassen und/oder einen Berührungszustand zwischen der Verriegelungsvorrichtung (32) und der Platte (CP) zu bestimmen.

4. Vorrichtung nach einem der vorherigen Ansprüche, **dadurch gekennzeichnet, dass** die Haltevorrichtung (30) durch Einfügen einer Bewegungsvorrichtung (220), die dazu bestimmt ist, die Haltevorrichtung (30) parallel und/oder quer zu der vorgegebenen Richtung (D), parallel oder quer zu der Ebene (12) zu bewegen, von dem Schlitten (22) (22') (22") getragen wird.

5. Vorrichtung nach Anspruch 4, **dadurch gekennzeichnet, dass** die Bewegungsvorrichtung (220) mindestens einen Schlitten (2220)(2222)(2224)(2220')(2222')(2224')(2220")(2222")(2 224") umfasst, der von dem Wagen (22)(22')(22")getragen wird, mit der Haltevorrichtung (30) verbunden ist und durch mindestens einen linearen Aktuator (2221)(2225)(2225)(2221')(2225')(2225')(2221")(2225")(2 225") betätigt werden kann.

6. Vorrichtung nach einem der vorherigen Ansprüche, **dadurch gekennzeichnet, dass** die Haltevorrichtung (30) L-förmig ist und neben mindestens einer der Greifvorrichtungen (60) (62) positioniert ist.

7. Vorrichtung nach einem der vorherigen Ansprüche, **dadurch gekennzeichnet, dass** die Station (CS) eine vorbestimmte Schnittlinie (CL) definiert; jede der Greifvorrichtungen (60) (62) umfassend einen Greifer (64), um mindestens eine Platte (CP) von der Seite der jeweiligen hinteren Kante (PB) zu greifen; wobei sich die Haltevorrichtung (30) ausreichend erstreckt, um die Verriegelungsvorrichtung (32) zwischen die Greifer (64) und die Schnittlinie (CL) zu bringen, wenn mindestens einer der Greifer (64) an der Platte (CP) von der Seite der jeweiligen hinteren Kante (PB) her angreift.

8. Vorrichtung nach einem der vorherigen Ansprüche, **dadurch gekennzeichnet, dass** die Zuführvorrichtung (20) den Schlitten (22) zwischen dem Träger (120) und der Ebene (12) trägt oder die Zuführvorrichtung (20) den Schlitten (22') seitlich des Trägers (120) zwischen dem Träger (120) und der Ebene (12) trägt, wobei die Zuführvorrichtung (20) für einen autonomen Betrieb konstruiert ist.

9. Vorrichtung nach einem der vorherigen Ansprüche, **dadurch gekennzeichnet, dass** die Zuführvorrichtung (20) den Schlitten (22) vor dem Träger (120) trägt, wobei die Zuführvorrichtung (20) konstruiert ist, um autonom oder durch Ziehen betätigt zu werden.

10. Plattensägemaschine (1) zum Schneiden von flachen Platten (CP), wovon jede eine gerade Seite (F), eine hintere Kante (PB) quer zu der Seite (F) und eine im Wesentlichen flache obere Fläche (PF) aufweist; wobei die Maschine mit einem Rahmen (10) versehen ist, der in Längsrichtung durch eine Schulter (111) begrenzt ist, die seitlich eine Ebene (12) zum Tragen der Platten (CP) begrenzt und die sich entlang einer vorbestimmten Richtung (D) quer zu einer Schneidestation (CS) erstreckt; wobei der Rahmen (10) einen Träger (120) auf der Seite der Schulter (111) trägt, die sich parallel zu der Richtung (D) erstreckt; **dadurch gekennzeichnet, dass** sie eine Zuführvorrichtung (20) nach einem der Ansprüche 1 bis 8 umfasst.

## Revendications

1. Un dispositif d'alimentation (20) pour une machine à scier les panneaux (1) pour couper des panneaux plats (CP), chacun d'entre eux possède une côté droit (F), un bord arrière (PB) transversal à ce côté (F) et une face supérieure sensiblement plate (PF);
ladite machine étant fournie avec un cadre (10) délimité longitudinalement par au moins une épaule (111) qui délimite latéralement un plan (12) de soutien pour lesdits panneaux (CP) et qui s'étend le long d'une direction prédéterminée (D) transversalement à une station de coupe (CS);
ledit cadre (10) soutenant au moins un faisceau (120) sur le côté de ladite épaule (111) s'étend de façon parallèle à ladite direction (D);
ledit dispositif d'alimentation (20) étant porté par ladite poutre (120) de manière glissante vers et depuis ladite station de coupe (CS) et comprend une glissière (22)(22')(22") équipée avec au moins un dispositif de préhension (60) (62) conçu pour saisir au moins un panneau (CP) sur le côté dudit bord (PB); où ladite glissière (22)(22')(22") comporte un dispositif de retenue (30) comprenant un dispositif de verrouillage (32), faisant face audit plan (12) pour conserver de manière stable un dit panneau (CP) porté par ledit plan (12) au niveau de ladite face respective (PF), ledit dispositif d'alimentation (20) étant **caractérisé par le fait que** dans ledit dispositif de verrouillage (32) comprend une unité d'aspiration (33) en communication fluide-dynamique avec un dispositif d'aspiration (34) à travers un conduit d'alimentation (36).

2. Le dispositif selon la revendication 1, **caractérisé par le fait que** ledit dispositif de verrouillage (32) se déplace transversalement sur ledit plan (12).

3. Le dispositif selon la revendication 1 ou 2, est **caractérisé par le fait que** le dispositif de retenu (30) comprend une extrémité d'un élément de frappe (35) associé avec ledit dispositif de verrouillage (32) pour détecter la présence dudit panneau (CP) et/ou déterminer une condition d'un contact entre ledit dispositif de verrouillage (32) et ledit panneau (CP).

4. Le dispositif selon l'une quelconque des revendications précédentes, est **caractérisé par le fait que** le dispositif de maintient (30) est porté par ladite glissière (22)(22')(22") à travers l'interposition d'un dispositif de mouvement (220) désigné pour déplacer ledit dispositif de maintient (30) parallèle et/ou de manière transversale à ladite direction prédéterminée (D), parallèle ou de manière transversale audit plan (12).

5. Le dispositif selon la revendication 4, **caractérisé par le fait que** le dispositif de mouvement (220) comprend au moins une glissière (2220) (2222) (2224) (2220') (2222') (2224') (2220") (2222") (2224") porté par ladite glissière (22) (22') (22"), connecté audit dispositif de retenu (30) et utilisable par l'intermédiaire d'au moins un actionneur linéaire(2221) (2225) (2225) (2221') (2225') (2225') (2221") (2225) (2225").

6. Le dispositif selon l'une quelconque des revendications précédentes, est **caractérisé par le fait que** le dispositif de retenu (30) possède une forme en L et est positionné le long d'au moins un dispositif de préhension (60)(62).

7. Le dispositif selon l'une quelconque des revendications précédentes, est **caractérisé par le fait que** ladite station (CS) définit une ligne de coupe prédéterminée (CL); chaque dit dispositif de préhension (60) (62) comprend un outil de préhension (64) pour saisir au moins un dit panneau (CP) à partir du côté du bord arrière respectif (PB); ledit dispositif de retenu (30) s'étend suffisamment pour apporter ledit dispositif de verrouillage (32) entre lesdites pinces (64) et ladite ligne de coupe (CL) lorsqu'au moins une desdites pinces (64) s'accroche audit panneau (CP) à partir du côté des bord arrières respectifs (PB).

8. Le dispositif selon l'une quelconque des revendications précédentes, dans ledit dispositif d'alimentation (20) porte ladite glissière (22) entre ladite poutre (120) et ledit plan (12) ou ledit dispositif d'alimentation (20) porte ladite glissière (22') latéralement à ladite poutre (120) entre lesdites poutres (120) et ledit plan (12); le dispositif d'alimentation (20) étant conçu pour fonctionner de manière autonome.

9. Le dispositif selon l'une quelconque des revendications, est **caractérisé par le fait que** le dispositif d'alimentation (20) porte ladite glissière (22) devant ladite poutre (120); ledit dispositif d'alimentation (20) étant conçu pour fonctionner de manière autonome ou en faisant glisser.

10. une machine à scier les panneaux (1) pour couper les panneaux plats (CP), chacun d'entre eux possède un côté droit (F), un bord arrière (PB) transversal audit côté (F) et une face supérieure sensiblement plate (PF); ladite machine étant fournie avec un cadre (10) délimité longitudinalement par une épaule (111) qui délimite latéralement un plan (12) de support pour lesdits panneaux (CP) et qui s'étendent le long d'une direction prédéterminée (D) transversalement vers la station de coupe (CS); ledit
cadre (10) soutenant la poutre (120) sur le côté de ladite épaule (111) s'étendant de manière parallèle à ladite direction (D); et **caractérisé par le fait qu'**elle comprend un dispositif d'alimentation (20) selon l'une quelconque des revendications 1 à 8.
